# EUROPEAN PATENT SPECIFICATION

(11) **EP 1 207 033 B1**
(45) Date of publication and mention of the grant of the patent: **03.08.2005**
(21) Application number: 01126288.8
(22) Date of filing: 06.11.2001
(51) Int. Cl.: B29C 47/04, B29C 47/56, B29D 30/62, B60C 13/00, B60C 13/04, B60C 15/06

(54) **Method and device for producing a two-part tire layer**
Verfahren und Vorrichtung zur Herstellung von Fahrzeugluftreifen aus zwei Schichten
Procédé et dispositif permettant de fabriquer des pneumatiques, posédant au moins deux couches

(30) Priority: 07.11.2000 IT TO001048
(43) Date of publication of application: 22.05.2002
(73) Proprietor: BRIDGESTONE CORPORATION, Tokyo 104-0031 (JP)
(72) Inventor: Tomlinson, Gordon Malcom, 00125 Roma (IT)
(74) Representative: Jorio, Paolo

(56) References cited:
- EP-A- 0 925 903
- EP-A- 1 103 391
- US-A- 4 917 164
- PATENT ABSTRACTS OF JAPAN vol. 016, no. 549 (M-1338), 18 November 1992 (1992-11-18) -& JP 04 208443 A (BRIDGESTONE CORP), 30 July 1992 (1992-07-30)
- PATENT ABSTRACTS OF JAPAN vol. 2000, no. 15, 6 April 2001 (2001-04-06) -& JP 2000 351306 A (OHTSU TIRE & RUBBER CO LTD:THE), 19 December 2000 (2000-12-19)

## Description

The present invention relates to a method and a device of producing a two-part layer of a road vehicle tire.

The present invention may be used to advantage for producing tire sidewall outer coating skims. Such a coating skim is normally defined by an abrasion strip and a lateral-wall strip arranged side by side and connected by a joint.

As any expert knows, a two-part layer of the above type is produced by co-extruding the two strips of elastomeric material side by side and feeding the two strips to a die, by which they are so gripped as to adhere to each other along the facing lateral edges.

The joint between the two strips is normally a straightforward butt joint, which has proved fairly unreliable when subjected normally to relatively severe stress by the nature and/or shape of the internal components of the tire adjacent to the joint.

EP-0925903-A1 discloses the production of unvulcanized tread rubber for pneumatic tires. A pneumatic tire includes a low conductive rubber portion forming at least a cap rubber portion of the tread rubber which provides a tread surface of the tire; a narrow high conductive rubber strip extends in a radial direction of the tire at a widthwise center region of the cap rubber portion, and is exposed to the tread surface to form a discharge path for allowing electrostatic charges of a vehicle body to be discharged to a road surface. An unvulcanized tread rubber for the tire is obtained by passing a high conductive unvulcanized rubber through a passage extending from an extruder unit to the back side of an extrusion orifice, to form at least part of the remaining portion of the tread rubber; the high conductive unvulcanized rubber while passing through the passage is partly introduced into a narrow branch passage and passed through a slit-like opening having a cross-sectional shape which is substantially straight in a height direction of the extrusion head and situated in the vicinity of the back side of the extrusion orifice, to form the narrow strip of the high conductive rubber in a composite body of different kinds of unvulcanized rubbers.

JP-04208443-A discloses a pneumatic tire, in which a rubber chafer and a side rubber are extruded into an integral form by a dual T-bar in order to prolong the tire life. A boundary part between a rubber chafer and a side rubber is oriented from inside in tire width direction to outside in the tire width direction and inclined from inside in tire radial direction to outside in the tire radial direction; the rubber chafer and the side rubber are extruded by a dual T-bar into an integral form. Accordingly, there is no occurrence of stepped parts at the boundary part between the rubber chafer and the side rubber. For this reason, upon vulcanization, no creek occurs at the boundary part between the rubber chafer and the side rubber, the separation of the boundary part is prevented and the tire life can be prolonged.

It is an object of the present invention to provide a method and a device of producing a two-part layer, designed to produce, cheaply, easily and by co-extrusion, stronger, more reliable joints between the two parts than is currently possible.

According to the present invention, there is provided a method and a device of producing a two-part layer of a road vehicle tire as recited in the attached claims.

The invention will be described with reference to the accompanying drawings, in which:
Figure 1 shows an exploded, partial view in perspective, from the output side, of a detail of a preferred embodiment of the extrusion device according to the present invention;
Figure 2 shows a partial view in perspective, from the input side, of a first detail in Figure 1;
Figures 3 and 4 show views in perspective, one from the input and the other from the output side, of another two details in Figure 1;
Figure 5 shows a partial cross section of a tire produced using the extrusion device according to the present invention.

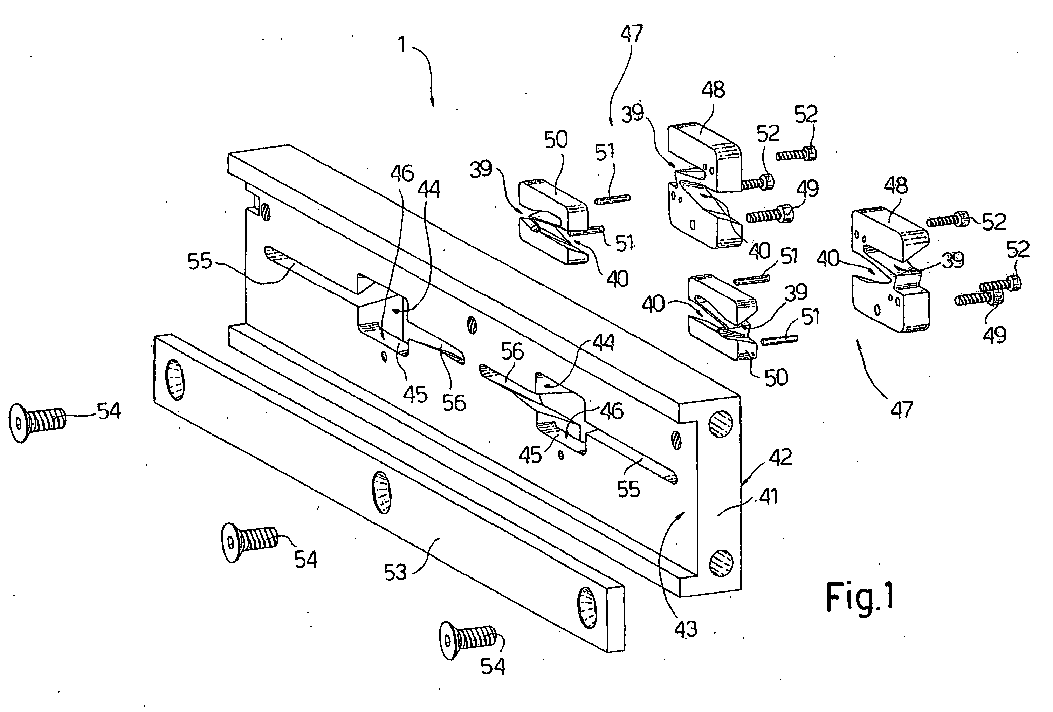

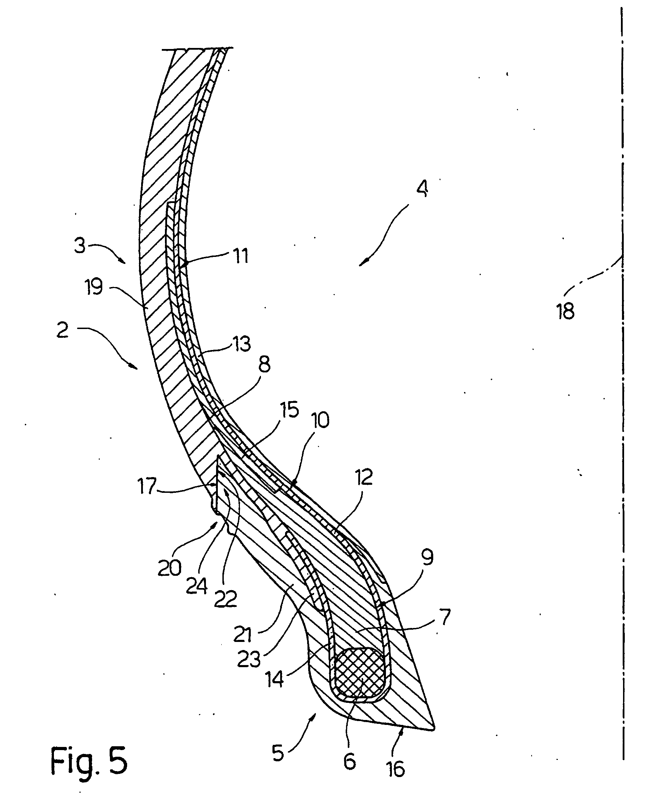

Number 1 in Figure 1 indicates as a whole an extrusion device for extruding two layers of elastomeric material, each of which, as shown in Figure 5, defines a coating skim 2 of a respective sidewall 3 (only one shown in Figure 5) of a road vehicle tire 4.

With reference to Figure 5, each sidewall 3 of tire 4 comprises, at the radially inner end, a bead 5 in turn comprising a bead bundle 6 coaxial with tire 4 and having a substantially triangular-section bead filler 7 with its base facing the outer lateral surface of bead bundle 6, and a vertex 8 facing radially outwards. Together with bead bundle 6, bead filler 7 defines a bead assembly 9, about which extends a respective lateral portion 10 of a body ply 11. Lateral portion 10 comprises an axially inner portion 12 lined with an innerliner 13; and a turn-up portion 14 located axially outwards of bead assembly 9, which is continued along sidewall 3 by a stiffening strip 15 contacting lateral portion 10 and extending radially outwards of vertex 8 along sidewall 3.

Each skim 2 coats the relative sidewall 3 externally, extends about relative bead assembly 9, is connected to a relative lateral edge of innerliner 13, and comprises an annular lateral-wall strip 19, and an annular abrasion strip 16, which is turned up into a U about relative bead assembly 9, and is defined laterally, on the axially outer side of relative bead assembly 9, by a sloping annular edge 17 substantially parallel to an equatorial plane 18 of tire 4.

Lateral-wall strip 19 is connected to abrasion strip 16 by an L-shaped joint 20, wherein an annular lateral portion 21 of abrasion strip 16 extends with an edge 17 contacting a lateral annular shoulder 22 of lateral-wall strip 19, and is superimposed on a thin annular appendix 23 projecting from shoulder 22 and facing relative bead bundle 6. Obviously, shoulder 22 slopes at an angle complementary to that of relative edge 17, and defines, with relative appendix 23, a recess 24 engaged by a triangular peripheral portion of lateral portion 21 of abrasion strip 16.

With reference to Figures 1 to 4, extrusion device 1 comprises two known double-outlet extruders (not shown), each outlet (not shown) of each of which feeds, in known manner not shown, a respective strip (not shown) of a respective elastomeric material to a respective preforming channel 25 formed through a preforming plate die 26 forming part of extrusion device 1. The four channels 25 of die 26 are arranged in side by side pairs 27, and each pair 27 comprises a channel 25a and a channel 25b arranged in a substantially side by side arrangement explained in detail later on. The outlets of channels 25a and 25b in each pair 27 of channels 25 communicate with a respective single known channel (not shown) of a known end die (not shown) for forming two coating skims 2 arranged specularly with respect to each other and for coating respective sidewalls 3 of tire 4. For which purpose, the two channels 25b are formed through die 26 in a substantially intermediate position with respect to the two channels 25a, so that channels 25 in each pair 27 are arranged specularly with respect to channels 25 in the other pair 27.

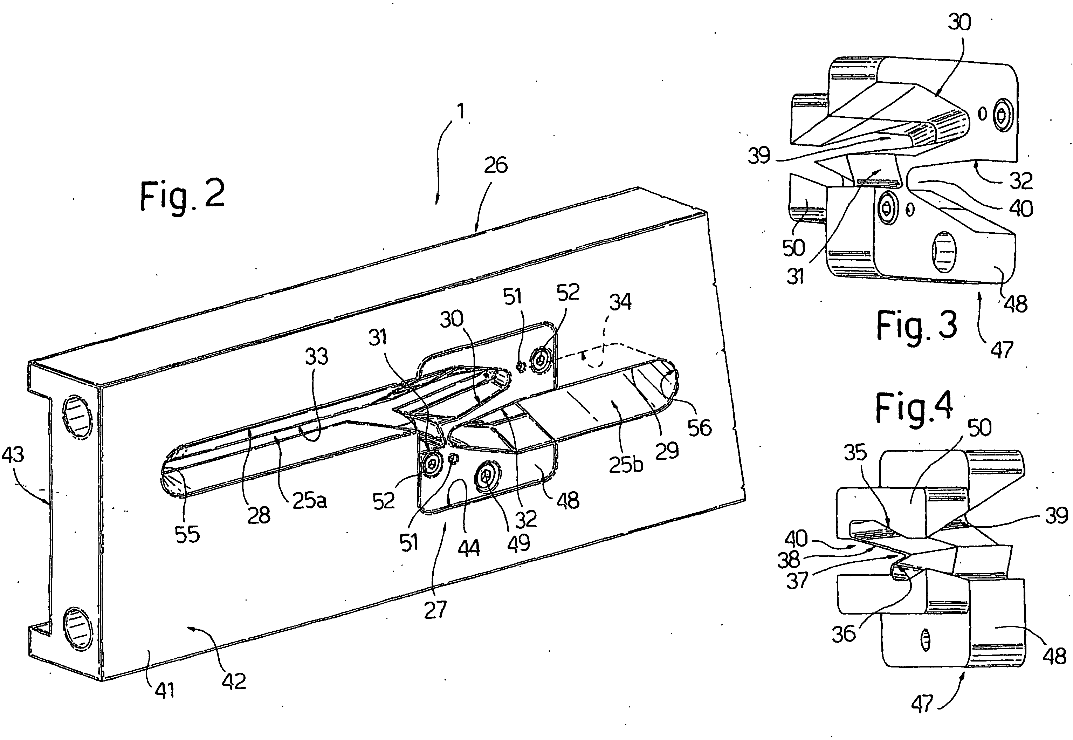

As shown in Figure 2, the two channels 25a and 25b are tapered, and have respective substantially elongated rectangular inlets 28 and 29 arranged side by side in parallel, offset planes. At the end facing inlet 29, inlet 28 has a lateral portion 30, which is defined internally by a recess 31 extending .crosswise to the plane of inlet 28 and towards inlet 29, and is superimposed on a lateral portion 32 of inlet 29; which lateral portion 32 terminates facing and to the side of recess 31.

As shown in Figure 2, the two channels 25a and 25b have respective substantially elongated rectangular outlets 33 and 34 arranged side by side in substantially the same plane. At the end facing outlet 34, outlet 33 has a lateral portion 35, which corresponds to lateral portion 30 of inlet 28, defines appendix 23 of lateral-wall strip 19, and is defined internally by a recess 36 communicating with and corresponding to recess 31. Recess 36 defines shoulder 22 and slopes with respect to the rest of outlet 33 to define, together with lateral portion 35, an acute dihedral 37 engaged by a lateral portion 38 of outlet 34 corresponding to lateral portion 32 of inlet 29, so that the two lateral portions 35 and 38 are interconnected by an L-shaped joint corresponding to respective L-shaped joint 20.

Lateral portions 30 and 35 define the inlet and outlet ends of a lateral portion 39 of channel 25a, while lateral portions 32 and 38 define the inlet and outlet ends of a lateral portion 40 of channel 25b.

With reference to Figure 1, die 26 comprises a substantially rectangular plate 41, which has a substantially horizontal longitudinal axis, is defined by an input surface 42 and an output surface 43 parallel to and opposite each other, and has, for each pair 27 of channels 25, a substantially rectangular cavity 44 formed through surface 42 and closed by an end wall 45 in which is formed a substantially rectangular through opening 46, which is substantially the same width as cavity 44, is smaller in height than cavity 44, and the top end of which substantially coincides with that of cavity 44.

Cavity 44 and relative opening 46 are engaged by a block 47 shown in Figures 3 and 4 and comprising a plate 48, which is inserted inside cavity 44 and fixed to wall 45 by a screw 49; and a plate 50, which is fitted through opening 46. As shown in Figure 1, plate 50 is fixed in the correct position to plate 48 by two pins 51 and two screws 52, and is locked releasably against plate 48 and inside opening 46 by a retaining rod 53 fixed to surface 43 by screws 54 so that a top peripheral portion of the rod partly closes opening 46.

As shown in Figures 3 and 4, lateral portions 39 and 40 of respective channels 25a and 25b are formed through block 47, while the remaining portions of channels 25a and 25b are defined by respective slots 55 and 56 formed through plate 41. More specifically, the input portions of lateral portions 39 and 40 are formed through plate 48, while the output portions of lateral portions 39 and 40 are formed through plate 50.

Extrusion device 1 described provides not only for preassembling each abrasion strip 16 to the relative lateral-wall strip 19, thus greatly reducing the assembly time of tire 4, but also for producing an extremely precise L-shaped joint 20, which, given its structure, is easily capable of absorbing any stress transmitted by the relative turn-up portion 14 of body ply 11, and enables the use of body plies 11 with narrow turn-up portions 14.

The easy-change blocks 47 of die 26 described provide for both changing the wear parts of die 26 cheaply and easily, and for altering the shape of joints 20 as required without changing plate 41.

Finally, forming each block 47 by superimposing respective plates 48 and 50 makes lateral portions 39 and 40 of respective channels 25a and 25b easier to produce, and makes die 26 much easier to maintain and clean.

## Claims

1. A method of producing a two-part layer (2) of a road vehicle tire (4); the method comprising the step of co-extruding two strips (19, 16) of a respective elastomeric material side by side, feeding the two strips (19, 16) to a preforming die (26), and adhere the two strips (19, 16) to each other in the preforming die (26); a first strip (19) is fed through a first flow channel (25a) of the preforming die (26) between a first inlet (28) and a first outlet (33), and a second strip (16) is fed through a second flow channel (25b) of the preforming die (26) between a second inlet (29) and a second outlet (34); the method being **characterized in** comprising the step of bringing an edge (17) of a lateral portion (21) of the second strip (16) in contact with a lateral shoulder (22) of the first strip (19) through the flow channels (25a, 25b), superimposing the lateral portion (21) of the second strip (16) on a thin annular appendix (23) projecting from the shoulder (22) of the first strip (19), and interconnecting the two strips (19, 16) with an L-shaped joint (20).

2. A method as claimed in Claim 1, and comprising the step of making a coating skim of a sidewall (3) of a tire (4) using said two-part layer (2) by forming a lateral-wall strip of the tyre (4) using said first strip (19) and forming an abrasion strip (16) of the tyre (4) using said second strip (16).

3. A method as claimed in Claim 1 or 2, and comprising the step of forming simultaneously two said two-part layer (2) using a same preforming die (26) having two side by side pairs (27) of flow channels (25a, 25b).

4. A device for producing a two-part layer (2) of a road vehicle tire (4), the device comprising a preforming plate die (26), through which extends at least one pair (27) of tapered flow channels (25a, 25b) for co-extruding and connecting together a first and a second strip (19, 16); a first flow channel (25a) of the preforming die (26) has a first inlet (28) and a first outlet (33), and a second flow channel (25b) of the preforming die (26) has a second inlet (29) and a second outlet (34); the device being **characterized in that** said inlets (28, 29) are separated, are arranged side by side, and have respective superimposed adjacent lateral portions (30, 32); said outlets (33, 34) are separated, are coplanar, and have respective adjacent lateral portions (35, 38), which are interconnected each other by an L-shaped joint; at the end facing the second outlet (34), the first outlet (33) has a first lateral portion (35) defined internally by a first recess (36), which communicates with and corresponds to a second recess (31) of the first inlet (28) and slopes with respect to the rest of the first outlet (33) to define, together with the first lateral portion (35), an acute dihedral (37) engaged by a second lateral portion (38) of the second outlet (34).

5. A device as claimed in Claim 4, wherein said layer (2) is a coating skim of a respective sidewall of said tire; said first and said second strip (19, 16) are a lateral-wall strip (19) and an abrasion strip (16).

6. A device as claimed in Claim 5, wherein said preforming die (26) has two side by side said pairs (27) of flow channels (25a, 25b); the two channels (25a, 25b) in each pair (27) are arranged specularly with respect to the two channels (25a, 25b) in the other pair (27).

7. A device as claimed in one of Claims 4 to 6, wherein said lateral portions (30, 32) of said inlets (28, 29) define, together with the respective said lateral portions (35, 38) of said outlets (33, 34), the opposite ends of respective lateral portions (39, 40) of the respective said channels (25a, 25b); said die (26) comprising a flat supporting plate (41), and, for each said pair (27) of said channels (25a, 25b), a block (47) fitted removably through said plate (41); said lateral portions (39, 40) of said channels (25a, 25b) being formed through said block (47); and said channels (25a, 25b) having the remaining portions defined by respective through slots (55, 56) formed through the supporting plate (41).

8. A device as claimed in Claim 7, wherein said block (47) comprises a first and a second plate (48, 50) superimposed and connected to each other; input portions of said lateral portions (39, 40) of said channels (25a, 25b) being formed through said first plate (48); and output portions of said lateral portions (39, 40) of said channels (25a, 25b) being formed through said second plate (50).

9. A device as claimed in Claim 8, wherein said supporting plate (41) comprises, for each said block (47), a rectangular cavity (44), which is engaged by said first plate (48) and closed by an end wall (45) through which is formed a rectangular through opening (46) engaged by said second plate (50).

10. A device as claimed in Claim 9, wherein said opening (46) is smaller in height than said cavity (44); said first plate (48) being positioned contacting said end wall (45), and being connected to the end wall (45) by removable fastening means (49).

## Patentansprüche

1. Verfahren zur Herstellung einer zweiteiligen Schicht (2) eines Straßenfahrzeugreifens (4); wobei das Verfahren den Schritt eines gemeinsamen Pressens zweier Streifen (19, 16) eines entsprechenden elastischen Polymers Seite an Seite, eines Zuführens der zwei Streifen (19, 16) zu einer Werkzeugform (26) und eines Aneinanderklebens der zwei Streifen (19, 16) in der Werkzeugform (26) umfasst; wobei ein erster Streifen (19) durch einen ersten Fließkanal (25a) der Werkzeugform (26) zwischen einem ersten Einlass (28) und einem ersten Auslass (33) geleitet wird, und wobei ein zweiter Streifen (16) durch einen zweiten Fließkanal (25b) der Werkzeugform (26) zwischen einem zweiten Einlass (29) und einem zweiten Auslass (34) geleitet wird; wobei das Verfahren **dadurch gekennzeichnet ist, dass** es den Schritt des Kontaktierens einer Kante (17) eines lateralen Abschnitts (21) des zweiten Streifens (16) mit einem lateralen Absatz (22) des ersten Streifens (19) durch die Fließkanäle (25a, 25b), des Übereinanderlegens des lateralen Abschnitts (21) des zweiten Streifens (16) auf einen dünnen von dem Absatz (22) des ersten Streifens (19) hervorstehenden ringförmigen Fortsatzes (23) und des Verbindens der zwei Streifen (19, 16) mit einer L-förmigen Verbindung (20) umfasst.

2. Verfahren nach Anspruch 1, welches den Schritt zur Herstellung einer Überzugsschicht einer Seitenwand (3) eines Reifens (4) unter Verwendung der zweiteiligen Schicht (2) durch Ausbilden eines lateralen Wandstreifens des Reifens (4) unter Verwendung des ersten Streifens (19) und durch Ausbilden eines Abriebstreifens (16) des Reifens (4) unter Verwendung des zweiten Streifens (16) umfasst.

3. Verfahren nach Anspruch 1 oder 2, welches den Schritt zum gleichzeitigen Ausbilden zwei der zweiteiligen Schicht (2) unter Verwendung einer gleichen Werkzeugform (26), welche zwei Seite-an-Seite-Paare (27) von Fließkanälen (25a, 25b) besitzt, umfasst.

4. Vorrichtung zur Herstellung einer zweiteiligen Schicht (2) eines Straßenfahrzeugreifens (4); wobei die Vorrichtung eine Werkzeugplattenform (26), durch welche mindestens ein Paar (27) konisch zulaufender Fließkanäle (25a, 25b) zum gemeinsamen Pressen und Miteinanderverbinden eines ersten und zweiten Streifens (19, 16) verläuft, umfasst; wobei ein erster Fließkanal (25a) der Werkzeugform (26) einen ersten Einlass (28) und einen ersten Auslass (33) besitzt, und wobei ein zweiter Fließkanal (25b) der Werkzeugform (26) einen zweiten Einlass (29) und einen zweiten Auslass (34) besitzt; wobei die Vorrichtung **dadurch gekennzeichnet ist, dass** die Einlässe (28, 29) getrennt sind, Seite an Seite angeordnet sind und entsprechende übereinander geschichtete benachbarte Lateralabschnitte (30, 32) besitzen; dass die Auslässe (33, 34) getrennt sind, koplanar angeordnet sind und entsprechende benachbarte Lateralabschnitte (35, 38) besitzen, welche miteinander durch eine L-förmige Verbindung verbunden sind; dass an der Endseite des zweiten Auslasses (34) der erste Auslass (33) einen ersten innen durch eine Vertiefung (36) definierten Lateralabschnitt (35) besitzt, welche mit einer zweiten Vertiefung (31) des ersten Einlasses (28) in Verbindung steht und bezüglich des Rests des ersten Auslasses (33) abfällt, um zusammen mit dem ersten Lateralabschnitt (35) einen spitzen Zweiflach (37) zu definieren, welcher sich mit einem zweiten Lateralabschnitt (38) des zweiten Auslasses (34) im Eingriff befindet.

5. Vorrichtung nach Anspruch 4, wobei die Schicht (2) eine Überzugsschicht einer entsprechenden Seitenwand des Reifens ist; wobei der erste und zweite Streifen (19, 16) ein Lateralwandstreifen (19) und ein Abriebstreifen (16) sind.

6. Vorrichtung nach Anspruch 5, wobei die Werkzeugform (26) zwei Seite-an-Seite-Paare (27) von Fließkanälen (25a, 25b) besitzt; wobei die zwei Kanäle (25a, 25b) in jedem Paar (27) spiegelbildlich bezüglich der beiden Kanäle (25a, 25b) in dem anderen Paar (27) angeordnet sind.

7. Vorrichtung nach einem der Ansprüche 4-6, wobei die Lateralabschnitte (30, 32) der Einlässe (28, 29) zusammen mit den entsprechenden Lateralabschnitten (35, 38) der Auslässe (33, 34) die gegenüberliegenden Enden der entsprechenden Lateralabschnitte (39, 40) der entsprechenden Kanäle (25a, 25b) definieren; wobei die Form (26) eine flache Trägerplatte (41) und für jedes Paar (27) der Kanäle (25a, 25b) einen Block (47), welcher entfernbar durch die Platte (41) eingepasst ist, umfasst; wobei die Lateralabschnitte (39, 40) der Kanäle (25a, 25b) durch den Block (47) ausgebildet sind; und wobei die Kanäle (25a, 25b), welche die durch entsprechende Durchgangsschlitze (55, 56) definierten übrigen Abschnitte besitzen, durch die Trägerplatte (41) ausgebildet sind.

8. Vorrichtung nach Anspruch 7, wobei der Block (47) eine erste und eine zweite Platte (48, 50) umfasst, welche übereinander geschichtet und miteinander verbunden sind; wobei Eingangsabschnitte der lateralen Abschnitte (39, 40) der Kanäle (25a, 25b) durch die erste Platte (48) ausgebildet sind; und wobei Ausgangsabschnitte der Lateralabschnitte (39, 40) der Kanäle (25a, 25b) durch die zweite Platte (50) ausgebildet sind.

9. Vorrichtung nach Anspruch 8, wobei die Trägerplatte (41) für jeden Block (47) einen rechteckigen Hohlraum (44) umfasst, welcher sich mit der ersten Platte (48) in Eingriff befindet und durch eine Endwand (45) begrenzt ist, durch welche eine rechteckige sich mit der zweiten Platte (50) in Eingriff befindende Durchgangsöffnung (46) ausgebildet ist.

10. Vorrichtung nach Anspruch 9, wobei die Öffnung (46) schmäler und höher als der Hohlraum (44) ist; wobei die erste Platte (48) in Kontakt mit der Endwand (45) angeordnet und durch entfernbare Befestigungsmittel (49) mit der Endwand (45) verbunden ist.

## Revendications

1. Procédé de production d'une couche en deux parties (2) d'un bandage pneumatique (4) pour véhicule routier ; le procédé comprenant l'étape consistant à coextruder deux bandes (19, 16) d'un matériau élastomère respectif côte à côte, alimenter les deux bandes (19, 16) dans un moule de préformage (26), et coller les deux bandes (19, 16) entre elles dans le moule de préformage (26) ; une première bande (19) est alimentée par un premier canal d'écoulement (25a) du moule de préformage (26) entre une première entrée (28) et une première sortie (33), et une seconde bande (16) est alimentée par un second canal d'écoulement (25b) du moule de préformage (26) entre une seconde entrée (29) et une seconde sortie (34) ; le procédé étant **caractérisé en ce qu'**il comprend l'étape consistant à amener un bord (17) d'une partie latérale (21) de la seconde bande (16) en contact avec un épaulement latéral (22) de la première bande (19) par les canaux d'écoulement (25a, 25b), superposer la partie latérale (21) de la seconde bande (16) sur un appendice annulaire fin (23) faisant saillie à partir de l'épaulement (22) de la première bande (19), et interconnecter les deux bandes (19, 16) avec un raccord en forme de L (20).

2. Procédé selon la revendication 1, et comprenant l'étape consistant à réaliser un enduit d'une paroi latérale (3) d'un bandage pneumatique (4) en utilisant ladite couche en deux parties (2) en formant une bande de paroi latérale du bandage pneumatique (4) en utilisant ladite première bande (19) et former une bande d'abrasion (16) du bandage pneumatique (4) en utilisant ladite seconde bande (16).

3. Procédé selon la revendication 1 ou 2, et comprenant l'étape consistant à former simultanément deux de ladite couche en deux parties (2) en utilisant un même moule de préformage (26) ayant deux paires (27) côte à côte de canaux d'écoulement (25a, 25b).

4. Dispositif permettant de produire une couche en deux parties (2) d'un bandage pneumatique (4) de véhicule routier ; le dispositif comprenant un moule de préformage à plateau (26), à travers lequel s'étend au moins une paire (27) de canaux d'écoulement (25a, 25b) progressivement rétrécis pour coextruder et raccorder ensemble une première et une seconde bande (19, 16) ; un premier canal d'écoulement (25a) du moule de préformage (26) possède une première entrée (28) et une première sortie (33), et un second canal d'écoulement (25b) du moule de préformage (26) possède une seconde entrée (29) et une seconde sortie (34) ; le dispositif étant **caractérisé en ce que** lesdites entrées (28, 29) sont séparées, sont agencées côte à côte et possèdent des parties latérales (30, 32) adjacentes superposées respectives ; lesdites sorties (33, 34) sont séparées, sont coplanaires, et possèdent des parties latérales (35, 38) adjacentes respectives, qui sont interconnectées entre elles par un raccord en forme de L ; au niveau de l'extrémité faisant face à la seconde sortie (34), la première sortie (33) a une première partie latérale (35) définie de manière interne par un premier enfoncement (36) qui communique avec et correspond à un second enfoncement (31) de la première entrée (28) et s'incline par rapport au reste de la première entrée (33) pour définir, conjointement à la première partie latérale (35), un dièdre aigu (37) mis en prise par une seconde partie latérale (38) de la seconde entrée (34).

5. Dispositif selon la revendication 4, dans lequel ladite couche (2) est un enduit d'une paroi latérale respective dudit bandage pneumatique ; ladite première et ladite seconde bande (19, 16) sont une bande (19) de paroi latérale et une bande d'abrasion (16).

6. Dispositif selon la revendication 5, dans lequel ledit moule de préformage (26) possède deux desdites paires (27) côte à côte de deux canaux (25a, 25b) ; les deux canaux (25a, 25b) dans chaque paire (27) sont agencés de manière spéculaire par rapport aux deux canaux (25a, 25b) dans l'autre paire (27).

7. Dispositif selon l'une quelconque des revendications 4 à 6, dans lequel lesdites parties latérales (30, 32) desdites entrées (28, 29) définissent, conjointement auxdites parties latérales (35, 38) respectives desdites sorties (33, 34), les extrémités opposées des parties latérales (39, 40) respectives desdits canaux (25a, 25b) respectifs ; ledit moule (26) comprenant un plateau de support plat (41), et pour chacune desdites paires (27) desdits canaux (25a, 25b), un bloc (47) monté de manière amovible à travers ledit plateau (41); lesdites parties latérales (39, 40) desdits canaux (25a, 25b) étant formées à travers ledit bloc (47) ; et lesdits canaux (25a, 25b) ayant les parties restantes définies par des fentes de passage (55, 56) respectives formées à travers le plateau de support (41).

8. Dispositif selon la revendication 7, dans lequel ledit bloc (47) comprend un premier et un second plateau (48, 50) superposés et raccordés entre eux ; les parties d'entrée desdites parties latérales (39, 40) desdits canaux (25a, 25b) étant formées à travers ledit premier plateau (48) ; et les parties de sortie desdites parties latérales (39, 40) desdits canaux (25a, 25b) étant formées à travers ledit second plateau (50).

9. Dispositif selon la revendication 8, dans lequel ledit plateau de support (41) comprend, pour chacun desdits blocs (47), une cavité rectangulaire (44) qui est mise en prise par ledit premier plateau (48) et fermée par une paroi d'extrémité (45) à travers laquelle est formée une ouverture de passage rectangulaire (46) mise en prise par ledit second plateau (50).

10. Dispositif selon la revendication 9, dans lequel ladite ouverture (46) est plus petite en hauteur que ladite cavité (44) ; ledit premier plateau (48) étant positionné en contact avec ladite paroi d'extrémité (45), et étant raccordé à la paroi d'extrémité (45) par des moyens de fixation amovibles (49).
